# EUROPEAN PATENT APPLICATION

(11) **EP 2 871 012 A1**
(43) Date of publication of application: **13.05.2015**
(21) Application number: 13813913.4
(22) Date of filing: 03.07.2013
(51) Int. Cl.: B23D 19/06, B23D 19/08, B23D 17/02

(54) **PLATE PROCESSING DEVICE**

(30) Priority: 06.07.2012 KR 20120074028
(71) Applicant: Park, Young Keun, Gimpo-si, Gyeonggi-do 415-802 (KR)
(72) Inventor: Park, Young Keun, Gimpo-si, Gyeonggi-do 415-802 (KR)
(74) Representative: Willquist, Sofia Ellinor
(86) International application number: PCT/KR2013/005882
(87) International publication number: WO 2014/007529

(57) **Abstract**

Provided is a plate processing device, which processes a surface of a plate having a strip shape, the plate processing device including a plurality of cutting members that rotate to cut the surface of the plate, a base part on which each of the cutting members is rotatably installed, a first driving part that rotates the base part to move at least one of the cutting members to a cutting position, a second driving part that rotates the cutting member located in the cutting position, and a third driving part that moves the base part in a processing direction of the plate to move the cutting member located in the cutting position in the processing direction of the plate.

## Description

### TECHNICAL FIELD

The present invention relates to a plate processing device, and more particularly, to a plate processing device that easily and variously processes a plate although the plate processing device has a simple structure.

### BACKGROUND ART

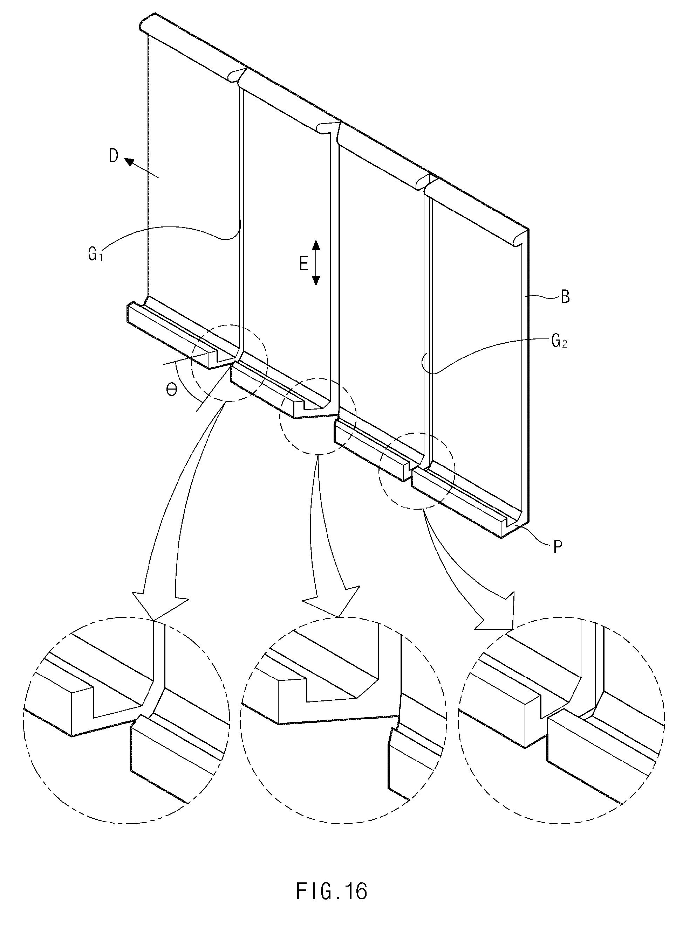

A surface of plates is processed for various purposes. For example, a recess may be formed in a side surface of a plate, and a predetermined recess may be formed in a side surface of a metal plate in a height direction thereof (refer to a direction E of FIG. 16) in order to accurately and easily bend the metal plate at a predetermined angle. That is, referring to FIG. 16, when recesses G1 and G2 having a triangular cross section are formed in a side surface of a plate B, and then, the plate B is bent along the recesses G1 and G2, the plate B is bent more accurately and easily. In addition, recesses having a tetragonal cross section may be formed in side surfaces of different plates in order to couple the plates to each other in a T shape.

Referring to FIG. 16, the plate B which is formed of a metal may have flange parts P on the upper or lower part thereof, and the flange parts P extend in a direction perpendicular to the side surface of the plate B. In this case, when the plate B is bent, the flange parts P may interfere with each other. Thus, the bending of the plate B may be difficult. Hence, it may be needed to form recesses also in the flange parts P.

In this case, as a bending angle of the plate B increases, an angle θ (refer to FIG. 16) between two sides of a triangle of the recesses should increase, so that the plate B can be bent regardless of the flange parts P. However, since one cutting tool forms a recess having only one predetermined shape, cutting tools should be replaced to correspond to bending angles of plates. This issue is more critical in a case that the plate B, which is formed of a metal and has a thin strip shape, is continuously provided in a longitudinal direction D thereof (refer to FIG. 16) to continuously form triangular recesses having various angles in the side surface of the plate B.

Both side surfaces of a plate should be processed in order to automatically form recesses in the side surfaces of the plate. To this end, the same structures are symmetrically disposed on both sides of the plate in the conventional art. However, in this case, a plate processing device has a significantly complicated configuration.

### DISCLOSURE OF THE INVENTION

### TECHNICAL PROBLEM

Accordingly, the present invention aims at providing a plate processing device that easily and variously processes a plate although the plate processing device has a simple structure.

### TECHNICAL SOLUTION

According to an aspect of the present invention, there is provided a plate processing device, which processes a surface of a plate having a strip shape, the plate processing device including: a plurality of cutting members that rotate to cut the surface of the plate; a base part on which each of the cutting members is rotatably installed; a first driving part that rotates the base part to move at least one of the cutting members to a cutting position; a second driving part that rotates the cutting member located in the cutting position; and a third driving part that moves the base part in a processing direction of the plate to move the cutting member located in the cutting position in the processing direction of the plate.

According to another aspect of the present invention, there is provided a plate processing device, which processes a surface of a plate having a strip shape, the plate processing device including: a plurality of cutting members that rotate to cut the surface of the plate; a base part on which each of the cutting members is rotatably installed; a first driving part that rotates the base part; a second driving part that rotates the cutting members; and a third driving part that moves the base part in a processing direction of the plate, wherein the base part has a plurality of insertion recesses extending from the outside of the base part to the inside thereof, the cutting members are installed on both sides of the insertion recess in a width direction of the insertion recess, respectively, the first driving part rotates the base part to move at least one of the cutting members to a cutting position, the second driving part rotates the cutting member located in the cutting position, and the plate is located in the insertion recess such that the surface of the plate is cut by any one of the cutting members installed on both the sides of the insertion recess.

### ADVANTAGEOUS EFFECTS

Since a plate processing device according to the present invention rotates a base part to select any one of a plurality of cutting members and process a surface of a plate, it is unnecessary to change a tool, thus improving working efficiency. In addition, the plate processing device selectively processes all surfaces of a plate although the plate processing device has a significantly simple structure

### BRIEF DESCRIPTION OF THE DRAWINGS

FIGS. 1 and 2 are perspective views illustrating a plate processing device according to a first embodiment of the present invention;
FIGS. 3 and 4 are perspective views illustrating connecting members;
FIG. 5 is a perspective view illustrating a driving motor and a driving member;
FIGS. 6 and 7 are exploded perspective views illustrating the driving motor and the driving member of FIG. 5;
FIG. 8 is a perspective view illustrating the driving member coupled to cutting members;
FIG. 9 is a perspective view illustrating the driving member decoupled from the cutting members;
FIGS. 10 and 11 are perspective views illustrating a plate processing device according to a second embodiment of the present invention;
FIGS. 12 to 14 are views illustrating a surface of plates processed using the plate processing device of FIG. 1;
FIG. 15 is a view illustrating a use state of the plates of FIGS. 12 to 14; and
FIG. 16 is a perspective view illustrating a plate having a recess formed in a side surface thereof.

### MODE FOR CARRYING OUT THE INVENTION

Hereinafter, preferred embodiments of the present invention will be described in detail with reference to the accompanying drawings, but the present invention is not limited thereto. For reference, like reference numerals substantially denote like elements throughout, and thus, a description made with reference to a drawing can be used for another description made with reference to another drawing. In addition, a description, which would be obvious to those skilled in the art to which the present invention belongs, or a repeated description may be omitted.

### Embodiment 1

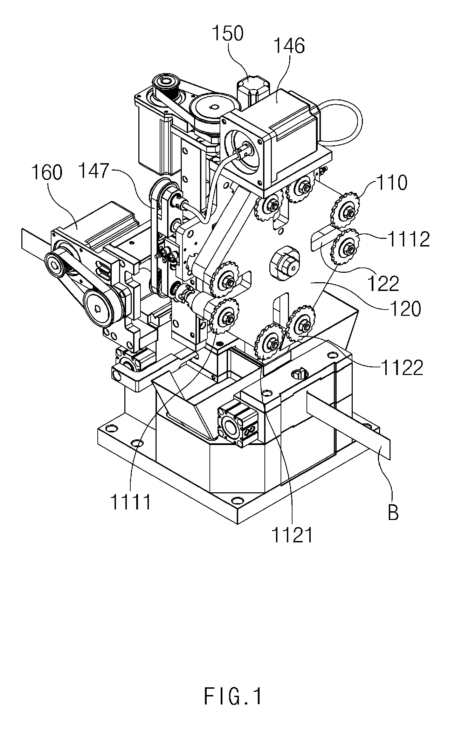

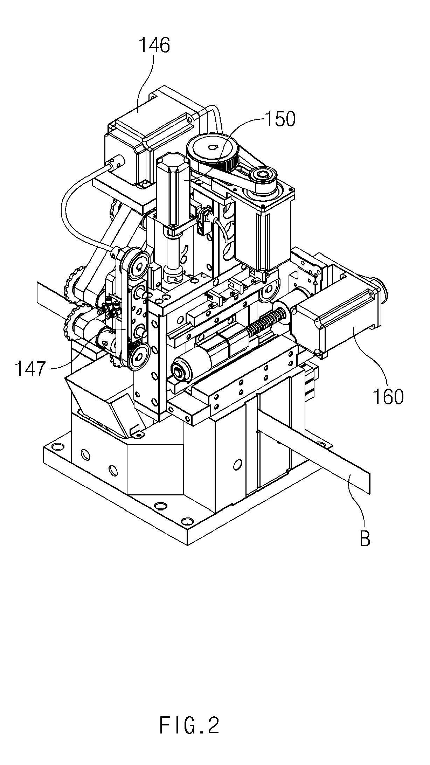

FIGS. 1 and 2 are perspective views illustrating a plate processing device according to a first embodiment of the present invention. Referring to FIGS. 1 and 2, a plate processing device according to the first embodiment processes a surface of a plate. For example, a cutting member 110 may form a recess in a side surface of a plate B having a strip shape (hereinafter, the case of forming a recess in a side surface of a plate will be exemplified for the convenience of understanding). To this end, the plate processing device includes a plurality of cutting members 110 that rotate to cut the side surface of the plate B. For example, the cutting member 110 may include a cutting blade on an outer surface thereof in a circumferential direction thereof as illustrated in FIG. 1.

In this case, the cutting member 110 may be provided in plurality if necessary. The number of the cutting members 110 may be eight as illustrated in FIGS. 1 and 2. The cutting members 110 may have different shapes from one another (in particular, the cutting blades of the cutting members 110 may have different shapes from each other). As such, when the cutting members 110 have different shapes from one another, recesses having various shapes can be formed using only the plate processing device. For reference, a plate is referred to as a metal plate having a thin strip shape herein.

The plate processing device includes a base part 120 on which the cutting members 110 are installed. That is, the cutting members 110 are installed on the base part 120 such that the cutting members 110 can individually rotate. Referring to FIG. 1, the base part 120 has a plurality of insertion recesses 122 extending from the outside of the base part 120 to the inside thereof. When the base part 120 moves downward to the lower side of FIG. 1, the plate B may be inserted in the insertion recess 122, which will be described later.

The cutting members 110 may be installed on both sides of the insertion recess 122, respectively. In other words, referring to FIG. 1, the cutting members 110 may be installed on both sides of the insertion recess 122 in a width direction of the insertion recess 122, respectively. Thus, when the plate B is located in the insertion recess 122, both side surfaces of the plate B may be cut by any one of the cutting members 110 installed on both the sides of the insertion recess 122. As such, since the insertion recesses 122 are formed in the base part 120, and the cutting members 110 are installed on both the sides of the insertion recesses 122, respectively, although the plate processing device has a significantly simple structure, the plate processing device processes both the side surfaces of the plate B.

For reference, plate processing devices in the conventional art require a significantly complicated structure to process both side surfaces of a plate. For example, a plate processing device in the conventional art may include a pair of base parts installed on both sides of a plate to process both side surfaces of the plate. As such, although the plate processing device according to the current embodiment has a configuration that is substantially a half of the configuration of plate processing devices in the conventional art, the plate processing device according to the current embodiment can process both the side surfaces of the plate B.

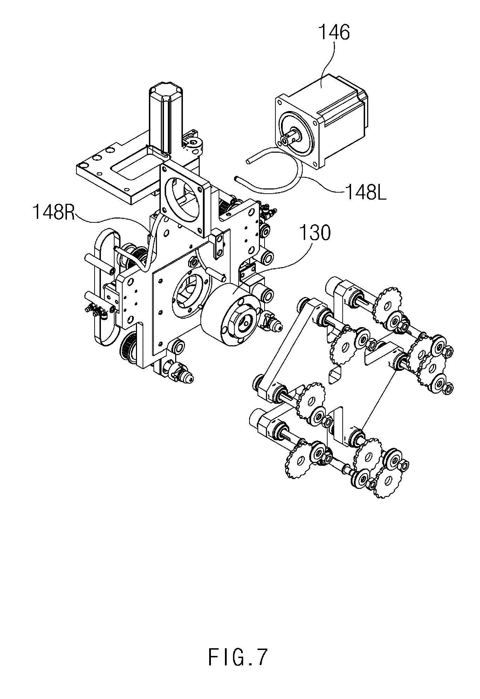

The plate processing device according to the current embodiment includes a first driving part 130 (refer to FIG. 7) to rotate the base part 120. As described above, the cutting members 110 are installed on the base part 120. Thus, it is significantly useful to rotate the base part 120 to select (at least) one of the cutting members 110 as a cutting member to be employed in a cutting operation. That is, the first driving part 130 rotates the base part 120 to move at least one of the cutting members 110 to a cutting position.

The cutting position is a position where the cutting member 110 processes the side surfaces of the plate B without a further rotation of the base part 120. For example, the cutting position may be a position where a cutting member 1121 or 1122 is located as illustrated in FIG. 1. Substantially, the base part 120 may move to the side surfaces of the plate B or in a processing direction of the plate B to process the side surfaces of the plate B, which will be described later. For reference, since the cutting members 110 are installed on both the sides of the insertion recess 122, respectively, the cutting members 1121 and 1122 may move together to the cutting position according to a rotation of the base part 120 (but, one of the cutting members 1121 and 1122 located in the cutting position, which is substantially employed in the cutting operation, may be determined by a fourth driving part that will be described later).

Cutting members of a plate processing device in the conventional art are all rotated to rotate a cutting member located in a cutting position. However, in this case, a large amount of power is needed to rotate all the cutting members. To address this issue, only the cutting member 1121 or 1122 located in the cutting position may be rotated. However, since the inner space of typical plate processing devices is not sufficient, it may be substantially difficult to rotate only a cutting member located in a cutting position (or an excessively complicated structure may be needed to rotate only a cutting member located in a cutting position).

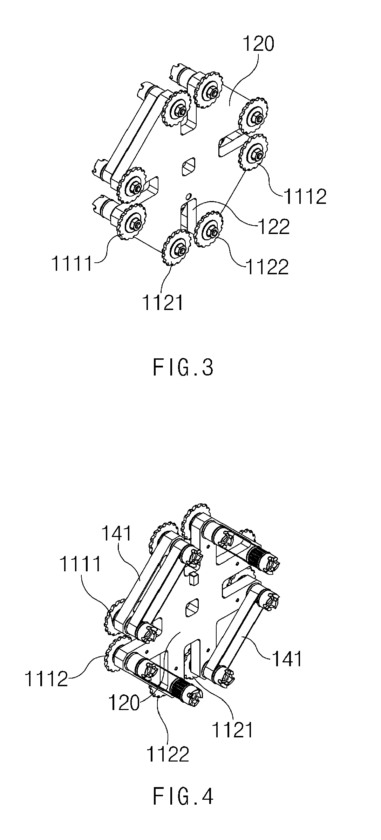

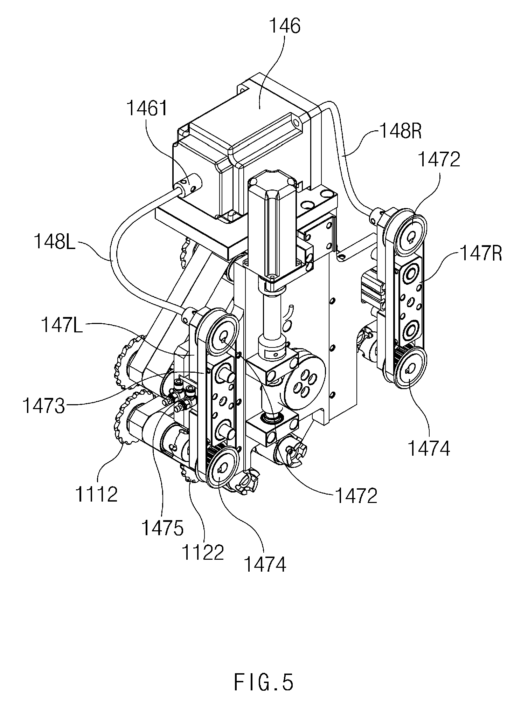

To address this issue, a second driving part 140 of the plate processing device according to the current embodiment may include connecting members 141 and a driver 142 (refer to FIG. 5), as illustrated in FIGS. 3 and 4. FIGS. 3 and 4 are perspective views illustrating connecting members. The second driving part 140 is a configuration for rotating the cutting member 1121 or 1122 located in the cutting position. Referring to FIGS. 3 and 4, the connecting members 141 are a configuration for connecting two cutting members 1111 and 1121 or 1112 and 1122 to each other. Thus, the cutting member 1111 or 1112 may rotate to rotate the cutting member 1121 or 1122 through the connecting member 141.

The driver 142 is a configuration for rotating the cutting member 1111 or 1112 connected through the connecting member 141 to the cutting member 1121 or 1122 located in the cutting position (refer to FIG. 5). Thus, the driver 142 may rotate the cutting member 1121 or 1122 located in the cutting position, through the cutting member 1111 or 1112. As such, the plate processing device according to the current embodiment rotates only the two cutting members 1111 and 1121 or 1112 and 1122 through the connecting members 141 and the driver 142, thereby forming recesses in the side surfaces of the plate B.

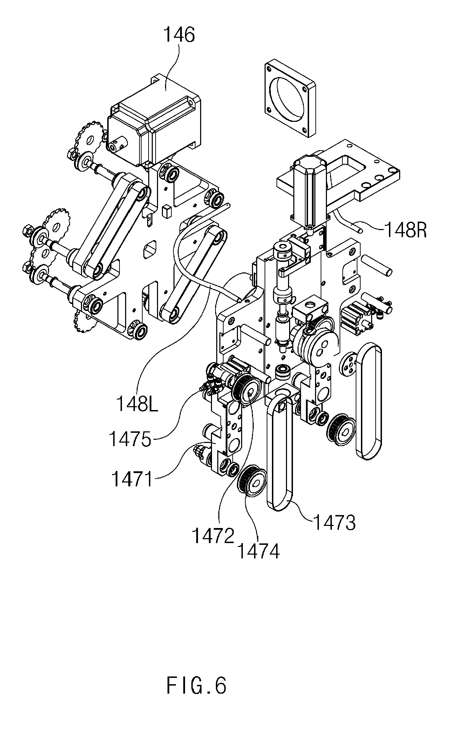

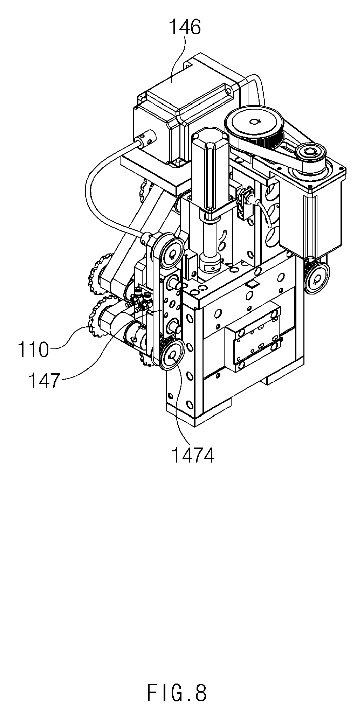

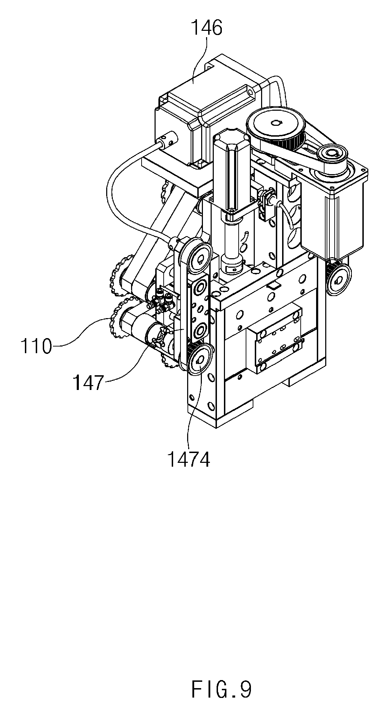

Referring to FIGS. 5 to 9, the second driving part 140 may include a driving motor 146 and driving members (including driving members 147L and 147R). FIG. 5 is a perspective view illustrating a driving motor and driving members. FIGS. 6 and 7 are exploded perspective views illustrating the driving motor and the driving members of FIG. 5. FIG. 8 is a perspective view illustrating the driving members coupled to cutting members. FIG. 9 is a perspective view illustrating the driving members decoupled from the cutting members.

Referring to FIGS. 5 to 7, the driving motor 146 generates driving force for rotating the cutting members 110. The driving force generated by the driving motor 146 rotates cable wires (including cable wires 148L and 148R) connected to the driving motor 146. Rotations of cable wires 148 are transmitted to driving members 147. The driving members 147 selectively transmit the rotations of the cable wires 148 to the cutting members 110. To this end, the driving member 147 may include a base 1471, a first pulley 1472 installed on the base 1471 to rotate together with the cable wire 148, a second pulley 1474 connected to the first pulley 1472 through a belt 1473 to rotate together with the first pulley 1472 and selectively rotate together with the cutting member 110, and a piston 1475 for reciprocating the base 1471.

More particularly, referring to FIGS. 8 and 9, the driving members 147 selectively transmit the driving force from the driving motor 146 to the cutting members 110 as described above. The plate processing device according to the current embodiment rotates the base part 120 through the first driving part 130 to select the cutting member 110 to be employed in the cutting operation as described above. In addition, the plate processing device according to the current embodiment rotates only two cutting members to process the side surfaces of the plate B. Thus, the plate processing device according to the current embodiment needs a member for preventing interference between a rotation of the base part 120 and a rotation of the cutting member 110.

The plate processing device according to the current embodiment includes the driving member 147 as the member for preventing interference between a rotation of the base part 120 and a rotation of the cutting member 110. That is, referring to FIG. 8, when a rotation of the cutting member 110 is needed, the driving member 147 uses the piston 1475 to move the base 1471, thereby coupling the second pulley 1474

(or a predetermined shaft integrally rotating with the second pulley 1474) to the cutting member 110. As such, when the second pulley 1474 is coupled to the cutting member 110, the driving force is transmitted from the driving motor 146 to the cutting member 110. At this point, the cutting member 110 to which the driving force is transmitted may be connected through the connecting member 141 to the cutting member 110 located in the cutting position. Referring to FIG. 9, when a rotation of the base part 120 is needed, the driving member 147 uses the piston 1475 to move the base 1471, thereby decoupling the second pulley 1474 from the cutting member 110. As such, when the second pulley 1474 is decoupled from the cutting member 110, the base part 120 rotates regardless of the second driving part 140.

However, the cutting members 110 are installed on both the sides of the insertion recess 122 of the base part 120, respectively, as described above. Thus, the plate processing device according to the current embodiment needs a member for individually rotating the cutting members 110 installed on both the sides of the insertion recess 122. To this end, referring to FIG. 5, the plate processing device according to the current embodiment may include: a left cable wire 148L and a right cable wire 148R to individually rotate the cutting members 110 installed on the left and right sides of the insertion recess 122; a left driving member 147L; and a right driving member 147R.

More particularly, the cable wires 148 may include the left cable wire 148L and the right cable wire 148R as illustrated in FIG. 5. The left cable wire 148L and the right cable wire 148R are connected, respectively, to both side distal ends of a rotation shaft 1461 of the driving motor 146 and are rotated by a rotation of the rotation shaft 1461. The driving members 147 may include the left driving member 147L connected to the left cable wire 148L, and the right driving member 147R connected to the right cable wire 148R.

A rotation direction of the second pulley 1474 of the left driving member 147L may be opposite to that of the second pulley 1474 of the right driving member 147R. That is, rotation directions of the cutting members 1121 and 1122 installed on both the sides of the insertion recess 122 may be opposite to each other in the cutting position. This is because the cutting member 1121 may rotate clockwise in FIG. 1, and the cutting member 1122 may rotate counterclockwise in FIG. 1, to process the side surfaces of the plate B. Thus, referring to FIG. 5, the left cable wire 148L may be connected to the left driving member 147L, and the right cable wire 148R may be connected to the right driving member 147R. Accordingly, the rotation direction of the second pulley 1474 of the left driving member 147L is opposite to that of the second pulley 1474 of the right driving member 147R.

The plate processing device according to the current embodiment includes a third driving part 150 that moves the base part 120 in a processing direction E (refer to FIG. 16) of a plate. According to the movement of the base part 120 caused by the third driving part 150, the cutting member 1121 or 1122 located in the cutting position is moved in the processing direction E to cut a side surface of the plate B disposed in the insertion recess 122. The processing direction E is a direction in which a recess is formed in the plate B, and may be a height direction of the plate B (refer to FIG. 16).

The plate processing device according to the current embodiment may include a fourth driving part 160 that moves the base part 120 in the width direction of the insertion recess 122 to move any one of the cutting members 110 installed on both the sides of the insertion recess 122 to a side surface of the plate B located in the insertion recess 122. The fourth driving part 160 is a configuration whereby any one of the cutting members 110 installed on both the sides of the insertion recess 122 is substantially employed in the cutting operation. The fourth driving part 160 adjusts a distance over which the base part 120 moves to a side surface of the plate B, to adjust the depth of a recess formed in the side surface of the plate B. A detailed configuration of the fourth driving part 160 is illustrated in the drawings (specifically, in FIG. 2).

As a result, the first driving part 130 rotates the base part 120 (selection of a cutting member); the fourth driving part 160 horizontally moves the base part 120 (selection of any one of cutting members installed on both sides of an insertion recess); the second driving part 140 rotates the cutting member 110 (a rotation of a cutting member located in a cutting position); and the third driving part 150 vertically moves the base part 120. Accordingly, the plate processing device according to the current embodiment forms a recess in a side surface of the plate B. Recesses having various shapes may be formed in a side surface of a plate by selecting the cutting members 110 according to rotations of the base part 120. However, the order of rotating and moving the base part 120 and the cutting member 110 by the first to fourth driving parts 130, 140, 150, and 160 may be appropriately changed if necessary.

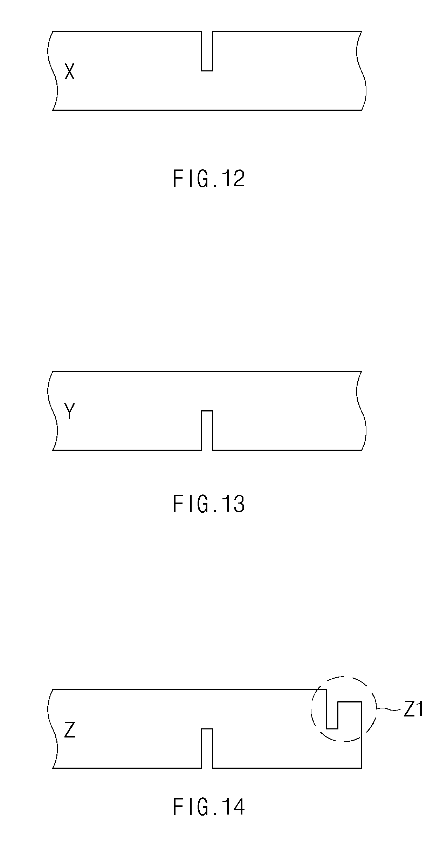

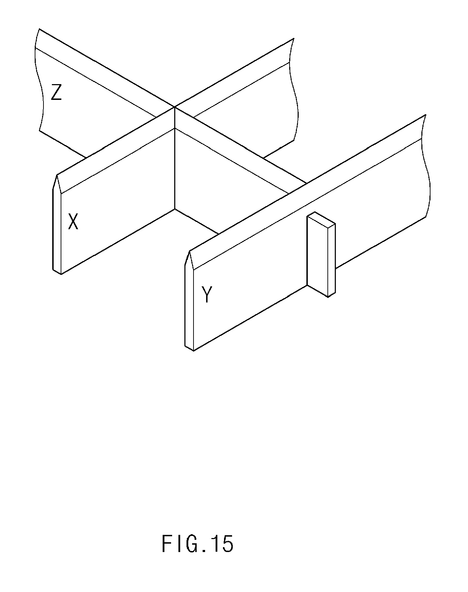

Referring to FIGS. 12 to 14, the plate processing device according to the current embodiment variously processes a surface of a plate. Referring to FIG. 12, the plate processing device according to the current embodiment may cut the upper surface of a plate X from the upper side thereof to the lower side thereof. A recess as illustrated in FIG. 12 or recesses as illustrated in FIG. 16 may be formed in a plate according to a distance over which the fourth driving part 160 horizontally moves the base part 120. Referring to FIG. 13, the plate processing device according to the current embodiment may cut the lower surface of a plate Y from the lower side thereof to the upper side thereof. Referring to FIG. 14, the plate processing device according to the current embodiment may cut the upper surface of a plate Z to have different widths (refer to an area 21). To this end, two processes are performed by sequentially selecting two cutting members that can cut a plate to have different widths. The plates X, Y, and Z processed as described above may be used in a shape as illustrated in FIG. 15. The plates X, Y, and Z illustrated in FIGS. 12 to 15 may be cutting blades (thin strip-shaped cutting lades used in die cutting).

As described above, since a plate processing device according to the current embodiment rotates a base part to select any one of a plurality of cutting members and process a surface of a plate, it is unnecessary to change a tool, thus improving working efficiency. Specifically, such an effect is further useful in the case of continuously forming various recesses in a side surface of a plate having a thin strip shape. This is because the various recesses are continuously formed without changing different tools. In addition, a plate processing device according to the current embodiment minimizes the number of rotating cutting members, thus processing a surface of a plate more efficiently. In addition, a plate processing device according to the current embodiment selectively processes all surfaces of a plate although the plate processing device has a significantly simple structure.

### Embodiment 2

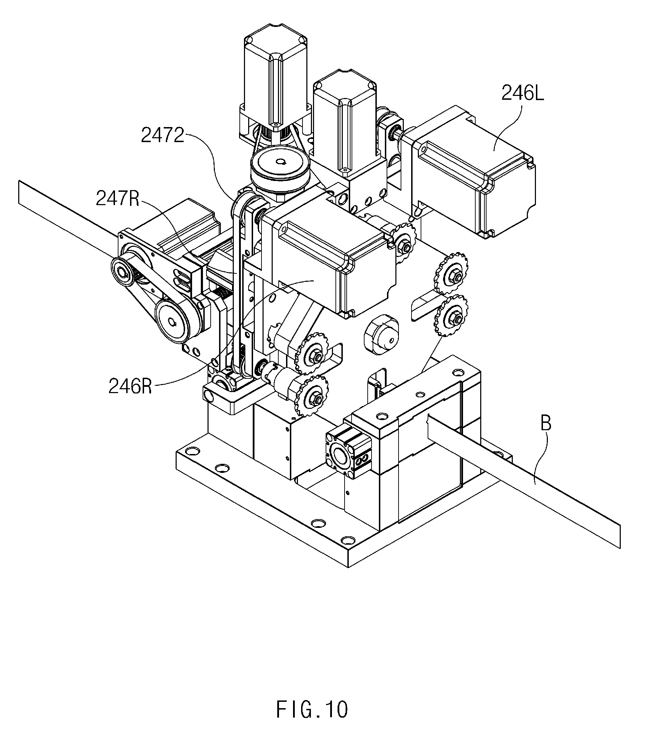

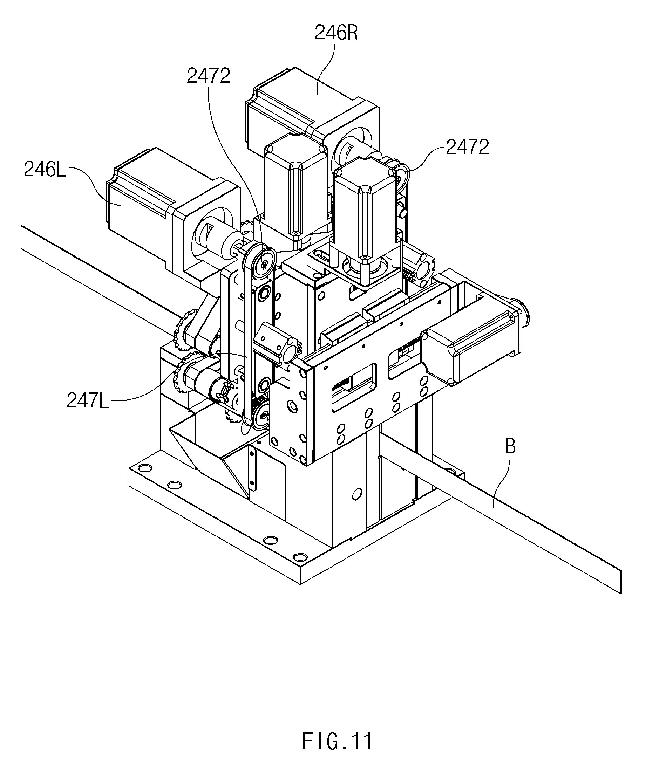

FIGS. 10 and 11 are perspective views illustrating a plate processing device according to a second embodiment of the present invention. Referring to FIGS. 10 and 11, a plate processing device according to the second embodiment has a configuration that is similar to that of the plate processing device according to the first embodiment. However, the plate processing device according to the second embodiment is different from the plate processing device according to the first embodiment in that the former includes separate driving motors 246L and 246R for a left driving member 247L and a right driving member 247R to individually rotate two cutting members located in a cutting position. That is, referring to FIGS. 10 and 11, the plate processing device according to the second embodiment includes a left driving motor 246L and a right driving motor 246R that are directly connected, respectively, to a first pulley 2472 of the left driving member 247L and a first pulley 2472 of the right driving member 247R to rotate the first pulley 2472 of the left driving member 247L and the first pulley 2472 of the right driving member 247R.

While the present invention has been particularly shown and described with reference to exemplary embodiments thereof, it will be understood by those of ordinary skill in the art that various changes in form and details may be made therein without departing from the spirit and scope of the present invention as defined by the following claims. Thus, the spirit of the present invention should be analyzed by the following claims, and equivalent changes thereof are made within the spirit of the present invention.

### INDUSTRIAL APPLICABILITY

A plate processing device according to the present invention easily and variously processes a plate although the plate processing device has a simple structure. Thus, the present invention is industrially applicable.

## Claims

1. A plate processing device, which processes a surface of a plate having a strip shape, the plate processing device comprising:
a plurality of cutting members that rotate to cut the surface of the plate;
a base part on which each of the cutting members is rotatably installed;
a first driving part that rotates the base part to move at least one of the cutting members to a cutting position;
a second driving part that rotates the cutting member located in the cutting position; and
a third driving part that moves the base part in a processing direction of the plate to move the cutting member located in the cutting position in the processing direction of the plate.

2. The plate processing device of claim 1, wherein the second driving part includes:
a connecting member that connects two of the cutting members to each other such that one of the cutting members rotates to rotate the other; and
a driver that rotates the cutting member connected by the connecting member to the cutting member located in the cutting position, in order to rotate the cutting member located in the cutting position.

3. The plate processing device of claim 1, wherein the second driving part includes:
a driving motor that generates driving force to rotate the cutting members; and
a driving member selectively coupled to the cutting members to selectively transmit the driving force from the driving motor to the cutting members.

4. The plate processing device of claim 1, wherein the base part has a plurality of insertion recesses extending from the outside of the base part to the inside thereof,
the cutting members are installed on both sides of the insertion recess in a width direction of the insertion recess, respectively, and
the plate is located in the insertion recess such that the surface of the plate is cut by any one of the cutting members installed on both the sides of the insertion recess.

5. The plate processing device of claim 4, wherein the second driving part rotates the cutting members installed on both the sides of the insertion recess, in directions different from each other.

6. The plate processing device of claim 4, further comprising a fourth driving part that moves the base part in the width direction of the insertion recess to move any one of the cutting members installed on both the sides of the insertion recess toward a side surface of the plate located in the insertion recess.

7. A plate processing device, which processes a surface of a plate having a strip shape, the plate processing device comprising:
a plurality of cutting members that rotate to cut the surface of the plate;
a base part on which each of the cutting members is rotatably installed;
a first driving part that rotates the base part;
a second driving part that rotates the cutting members; and
a third driving part that moves the base part in a processing direction of the plate,
wherein the base part has a plurality of insertion recesses extending from the outside of the base part to the inside thereof,
the cutting members are installed on both sides of the insertion recess in a width direction of the insertion recess, respectively,
the first driving part rotates the base part to move at least one of the cutting members to a cutting position,
the second driving part rotates the cutting member located in the cutting position, and
the plate is located in the insertion recess such that the surface of the plate is cut by any one of the cutting members installed on both the sides of the insertion recess.
